# EUROPEAN PATENT APPLICATION

(11) **EP 4 832 372 A1**
(43) Date of publication of application: **28.10.2026**
(21) Application number: 25744518.9
(22) Date of filing: 17.01.2025
(51) Int. Cl.: H04B 7/185

(54) **SATELLITE COMMUNICATION METHOD AND RELATED APPARATUS**

(30) Priority: 25.01.2024 CN 202410114371
(71) Applicant: Huawei Technologies Co., Ltd., Shenzhen, Guangdong 518129 (CN)
(72) Inventor: KONG, Chuili, Shenzhen, Guangdong 518129 (CN); WANG, Yu, Shenzhen, Guangdong 518129 (CN); LI, Kexin, Shenzhen, Guangdong 518129 (CN); WANG, Jun, Shenzhen, Guangdong 518129 (CN)
(74) Representative: MERH-IP Matias Erny Reichl Hoffmann Patentanwälte PartG mbB
(86) International application number: PCT/CN2025/072955
(87) International publication number: WO 2025/157077

(57) **Abstract**

Embodiments of this application provide a satellite communication method and a related apparatus. The method is applied to a serving satellite, and the method includes: generating first indication information, where the first indication information includes a signal offset, at a terminal device UE, of a cooperative satellite relative to the serving satellite or reference information for calculating the offset, and a synchronization signal block SSB of the cooperative satellite is configured as a quasi-co-location QCL source signal; and sending the first indication information. According to embodiments of this application, multi-satellite joint transmission can be implemented, thereby achieving throughput enhancement that is transparent to a terminal side.

## Description

This application claims priority to Chinese Patent Application No.202410114371.6, filed with the China National Intellectual Property Administration on January 25, 2024 and entitled "SATELLITE COMMUNICATION METHOD AND RELATED APPARATUS", which is incorporated herein by reference in its entirety.

### TECHNICAL FIELD

The present invention relates to the field of satellite communication technologies, and in particular, to a satellite communication method and a related apparatus.

### BACKGROUND

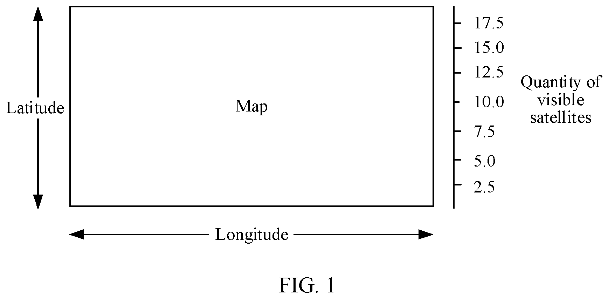

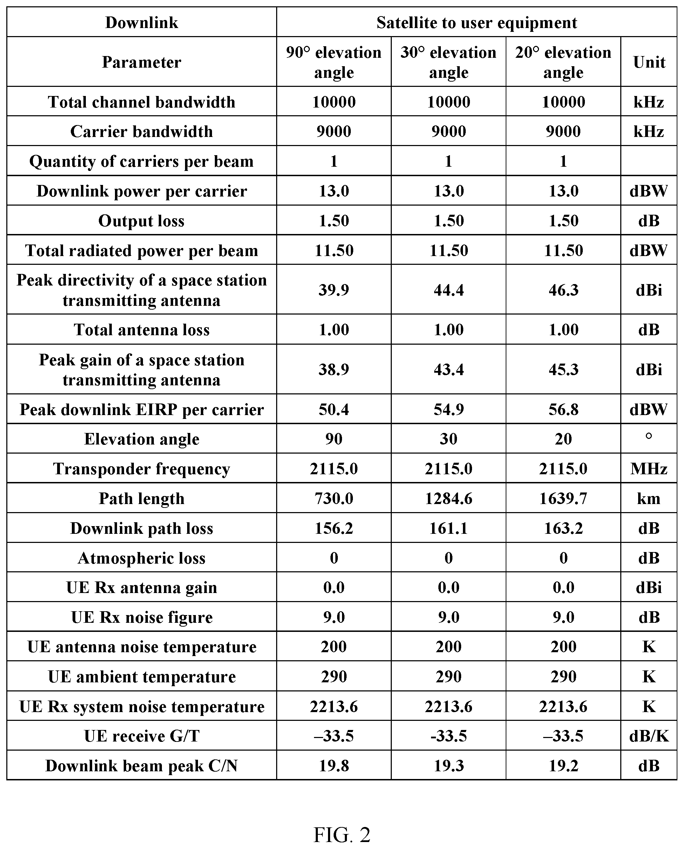

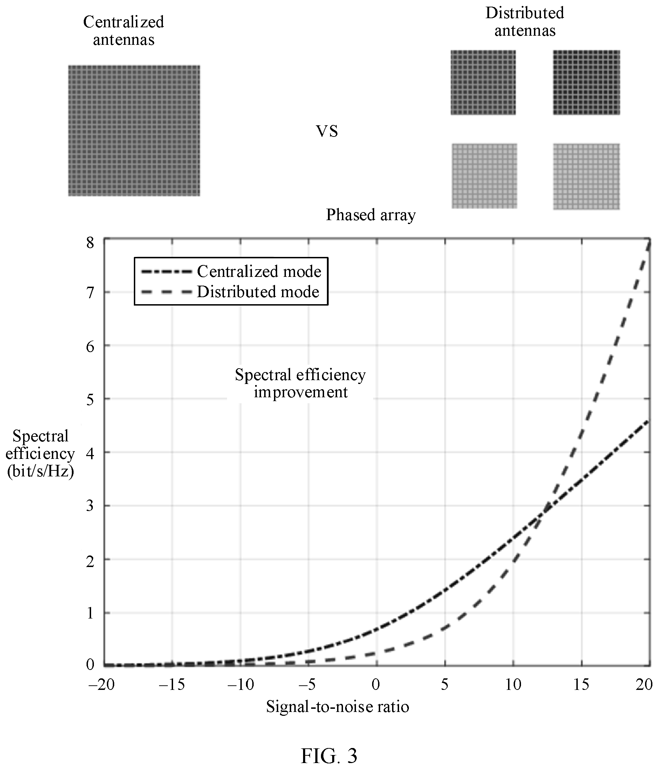

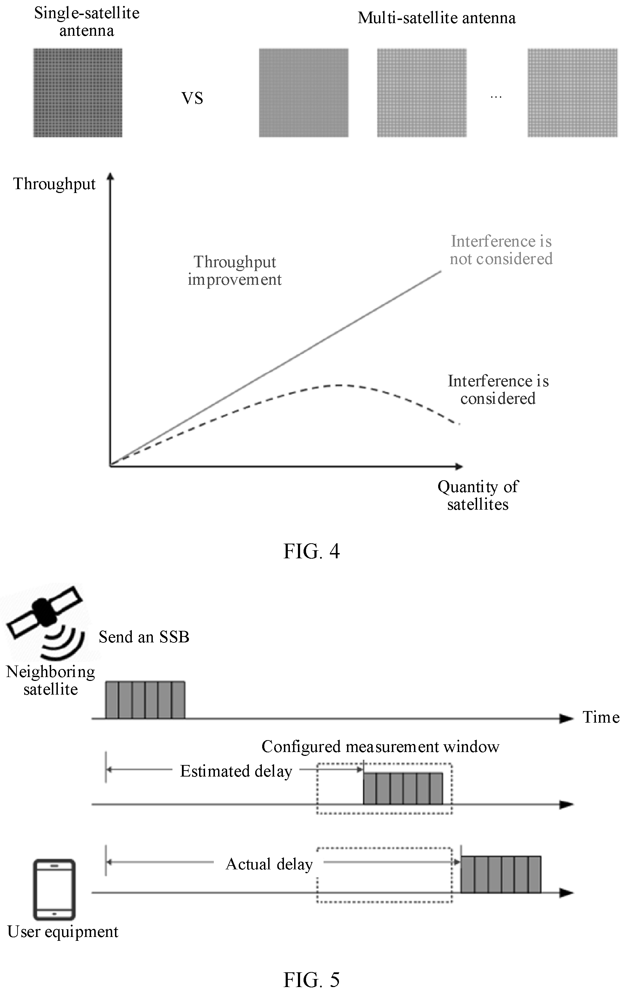

Future satellite communication systems are mainly characterized by two features: large-scale constellations and high-gain antennas. For large-scale constellations, the Starlink generation 2 (Starlink gen2) is expected to launch 30,000 satellites, and as of November 2023, there are over 5,000 Starlink (Starlink) satellites in orbit. Simulation is conducted based on the specifications of the Starlink generation 1 (Starlink gen1) shell 0 satellite constellation, featuring an orbital altitude of 550 km, an inclination of 53 degrees, 72 orbital planes, and 22 satellites per plane. FIG. 1 shows distribution of a quantity of Starlink satellites visible to a user equipment (User Equipment, UE) side. It can be learned that a ground UE can simultaneously detect a plurality of satellites. For example, in mid- and high-latitude regions, the UE can be simultaneously covered by nearly 20 satellites. The satellite communication company AST is used as an example for high-gain antennas. The payload of the company can carry an antenna array of up to 64 square meters. Due to the high antenna gain on a satellite side, a carrier-to-noise ratio (carrier-to-noise, CNR) of up to 20 dB can be provided, as shown in FIG. 2 below. Large-scale constellations and high-gain antennas provide prerequisites for multi-satellite MIMO. Multi-satellite MIMO can significantly improve UE rates, and this improvement can be categorized into two aspects. First is spectral efficiency improvement. In a high signal-to-noise ratio (Signal-to-Noise Ratio, SNR) range with the same power and the same quantity of antennas, compared with a centralized mode, a distributed mode can achieve higher spectral efficiency, as shown in FIG. 3 below. Second is throughput improvement. Compared with a single-satellite antenna, a multi-satellite antenna with the same specification can greatly increase the throughput. As shown in FIG. 4 below, when interference is not considered, the throughput of the multi-satellite antenna may increase linearly; and when interference is considered, the throughput of the multi-satellite antenna increases up to a specific value, beyond which it declines due to interference limitation.

It can be learned from analysis that multi-satellite joint transmission not only improves spectral efficiency, but also increases the throughput, and has significant commercial prospects. However, there is a difference in time at which synchronization signal blocks (Synchronization Signal/PBCH Block, SSB) of different satellites arrive at a terminal device (User Equipment, UE). As shown in FIG. 5, if an SSB sent by a serving satellite is predicted based on related parameters, an estimated delay may be obtained to determine a measurement window for receiving the SSB by the UE. However, an actual delay of an SSB sent by a neighboring satellite is usually different from the estimated delay. If the SSB of the neighboring satellite is received based on the measurement window corresponding to the serving satellite, the SSB cannot be received. Due to the difference in arrival times of signals from different satellites at the UE, there is a technical barrier in implementing multi-satellite joint transmission.

### SUMMARY

Embodiments of this application disclose a satellite communication method and a related apparatus, to implement multi-satellite joint transmission, thereby achieving throughput enhancement that is transparent to a terminal side.

According to a first aspect, an embodiment of this application provides a satellite communication method. The method is applied to a serving satellite, and the method includes:
generating first indication information, where the first indication information includes a signal offset, at a terminal device UE, of a cooperative satellite relative to the serving satellite or reference information for calculating the offset, and a synchronization signal block SSB of the cooperative satellite is configured as a quasi-co-location QCL source signal; and
sending the first indication information.

In the method, when the serving satellite (or a second communication apparatus) is currently providing a communication service for a first communication apparatus, the cooperative satellite (or a third communication apparatus) is configured, via QCL, to be in a cooperative relationship with the serving satellite (or the second communication apparatus), and then one-way delays from the cooperative satellite and the serving satellite to the first communication apparatus are represented based on the signal offset, so that the first communication apparatus determines a time window for receiving the SSB of the cooperative satellite, to perform SSB reception and synchronization. In this way, the first communication apparatus can communicate with the cooperative satellite, that is, joint transmission between the cooperative satellite and the serving satellite is implemented, thereby achieving throughput enhancement that is transparent to a terminal side.

With reference to the first aspect, in a possible implementation of the first aspect, the serving satellite and the cooperative satellite belong to intra-frequency networking.

With reference to the first aspect, in a possible implementation of the first aspect, the serving satellite and the cooperative satellite belong to inter-frequency networking.

With reference to any one of the first aspect or the foregoing possible implementations of the first aspect, in another possible implementation of the first aspect, the first indication information further includes a center frequency of the SSB of the cooperative satellite, a subcarrier spacing SCS of the SSB of the cooperative satellite, and a system frame number SFN offset between the cooperative satellite and the serving satellite, where the SFN offset and the signal offset are used to determine a time window for receiving the SSB of the cooperative satellite, the center frequency is used as a frequency for a receiver to receive the SSB, and the SCS is used to demodulate the SSB from the cooperative satellite.

With reference to any one of the first aspect or the foregoing possible implementations of the first aspect, in another possible implementation of the first aspect, the reference information includes an ephemeris of the cooperative satellite.

With reference to any one of the first aspect or the foregoing possible implementations of the first aspect, in another possible implementation of the first aspect, the method further includes:
calculating the signal offset based on one-way delay parameters from the serving satellite and the cooperative satellite to the UE.

With reference to any one of the first aspect or the foregoing possible implementations of the first aspect, in another possible implementation of the first aspect, the method further includes:
sending second indication information, where the second indication information indicates that the SSB of the cooperative satellite is the QCL source signal.

According to a second aspect, an embodiment of this application provides a satellite communication method. The method is applied to a terminal device, and the method includes:
receiving first indication information, where the first indication information includes a signal offset of a cooperative satellite relative to a serving satellite at the terminal device UE or reference information for calculating the signal offset, and a synchronization signal block SSB of the cooperative satellite is configured as a quasi-co-location QCL source signal;
receiving the SSB from the cooperative satellite based on the first indication information according to the signal offset; and
receiving a physical downlink shared channel PDSCH or a physical downlink control channel PDCCH from the cooperative satellite.

In the method, when the serving satellite (or a second communication apparatus) is currently providing a communication service for a first communication apparatus, the cooperative satellite (or a third communication apparatus) is configured, via QCL, to be in a cooperative relationship with the serving satellite (or the second communication apparatus), and then one-way delays from the cooperative satellite and the serving satellite to the first communication apparatus are represented based on the signal offset, so that the first communication apparatus determines a time window for receiving the SSB of the cooperative satellite, to perform SSB reception and synchronization. In this way, the first communication apparatus can communicate with the cooperative satellite, that is, joint transmission between the cooperative satellite and the serving satellite is implemented, thereby achieving throughput enhancement that is transparent to a terminal side.

With reference to the second aspect, in a possible implementation of the second aspect, the first indication information includes the signal offset, and the receiving the SSB from the cooperative satellite based on the first indication information according to the signal offset includes:
receiving the SSB from the cooperative satellite based on the signal offset in the first indication information.

With reference to any one of the second aspect or the foregoing possible implementations of the second aspect, in another possible implementation of the second aspect, the first indication information includes the reference information, and the receiving the SSB from the cooperative satellite based on the first indication information according to the signal offset includes:
determining the signal offset based on the reference information in the first indication information; and
receiving the SSB from the cooperative satellite based on the signal offset.

With reference to any one of the second aspect or the foregoing possible implementations of the second aspect, in another possible implementation of the second aspect, the reference information includes an ephemeris of the cooperative satellite, and the determining the signal offset based on the reference information in the first indication information includes:
determining one-way delay parameters from the serving satellite and the cooperative satellite to the UE based on an ephemeris of the serving satellite and the ephemeris of the cooperative satellite; and
determining the signal offset based on the one-way delay parameters.

With reference to any one of the second aspect or the foregoing possible implementations of the second aspect, in another possible implementation of the second aspect, the serving satellite and the cooperative satellite belong to intra-frequency networking.

With reference to any one of the second aspect or the foregoing possible implementations of the second aspect, in another possible implementation of the second aspect, the serving satellite and the cooperative satellite belong to inter-frequency networking.

With reference to any one of the second aspect or the foregoing possible implementations of the second aspect, in another possible implementation of the second aspect, the first indication information further includes a center frequency of the SSB of the cooperative satellite, a subcarrier spacing SCS of the SSB of the cooperative satellite, and a system frame number SFN offset between the cooperative satellite and the serving satellite, where the SFN offset and the signal offset are used to determine a time window for receiving the SSB of the cooperative satellite, the center frequency is used as a frequency for a receiver to receive the SSB, and the SCS is used to demodulate the SSB from the cooperative satellite.

With reference to any one of the second aspect or the foregoing possible implementations of the second aspect, in another possible implementation of the second aspect, the method further includes:
receiving second indication information, where the second indication information indicates that the SSB of the cooperative satellite is the QCL source signal.

According to a third aspect, an embodiment of this application provides a communication apparatus. The communication apparatus may be a network device or a component or a functional module in the network device. The communication apparatus may be a serving satellite or may be configured on the serving satellite.

The communication apparatus includes a module configured to perform the method according to any one of the first aspect or the possible implementations of the first aspect.

Alternatively, the communication apparatus includes a processor, and the processor is configured to perform the method according to any one of the first aspect or the possible implementations of the first aspect.

According to a fourth aspect, an embodiment of this application provides a communication apparatus. The communication apparatus may be a terminal device or a component or a functional module in the terminal device.

The communication apparatus includes a module configured to perform the method according to any one of the second aspect or the possible implementations of the second aspect.

Alternatively, the communication apparatus includes a processor, and the processor is configured to perform the method according to any one of the second aspect or the possible implementations of the second aspect.

According to a fifth aspect, an embodiment of this application provides a communication apparatus, including a logic circuit and an interface. The logic circuit is coupled to the interface; and the interface is configured to input and/or output information.

The logic circuit is configured to perform the method according to any one of the first aspect or the possible implementations of the first aspect. Alternatively,
the logic circuit is configured to perform the method according to any one of the second aspect or the possible implementations of the second aspect.

According to a sixth aspect, an embodiment of this application provides a computer-readable storage medium. The computer-readable storage medium is configured to store a computer program.

When the computer program is executed, the method according to any one of the first aspect or the possible implementations of the first aspect can be implemented. Alternatively,
when the computer program is executed, the method according to any one of the second aspect or the possible implementations of the second aspect can be implemented.

According to a seventh aspect, an embodiment of this application provides a communication system. The communication system includes a network device and a terminal device.

The network device is configured to perform the method according to any one of the first aspect or the possible implementations of the first aspect, and the terminal device is configured to perform the method according to any one of the second aspect or the possible implementations of the second aspect.

### BRIEF DESCRIPTION OF DRAWINGS

The following describes accompanying drawings used in embodiments of this application.
FIG. 1 is a diagram of distribution of a quantity of visible satellites according to an embodiment of this application;
FIG. 2 is a diagram of a relationship between an antenna gain and a carrier-to-noise ratio according to an embodiment of this application;
FIG. 3 is a diagram of comparison of spectral efficiency between centralized antennas and distributed antennas according to an embodiment of this application;
FIG. 4 is a diagram of a relationship between a quantity of satellites and throughput according to an embodiment of this application;
FIG. 5 is a diagram of SSB delays of different satellites according to an embodiment of this application;
FIG. 6a is a diagram of a structure of a communication system according to an embodiment of this application;
FIG. 6b is a diagram of a satellite communication system in a transparent transmission scenario according to an embodiment of this application;
FIG. 6c is a diagram of a satellite communication system in a regeneration scenario according to an embodiment of this application;
FIG. 6d is a diagram of signaling interaction and user data transmission between satellites according to an embodiment of this application;
FIG. 7 is a diagram of SSB-MTC information element configuration according to an embodiment of this application;
FIG. 8 is a schematic flowchart of a satellite communication method according to an embodiment of this application;
FIG. 9 is a schematic flowchart of a satellite communication method according to an embodiment of this application;
FIG. 10 is a schematic flowchart of a satellite communication method according to an embodiment of this application;
FIG. 11 is a schematic flowchart of a satellite communication method according to an embodiment of this application;
FIG. 12 is a schematic flowchart of a satellite communication method according to an embodiment of this application;
FIG. 13 is a diagram of a structure of a communication apparatus according to an embodiment of this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

The following describes embodiments of this application with reference to accompanying drawings in embodiments of this application.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to the same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two, three, or more, and "and/or" is used to describe an association relationship between associated objects, which indicates that three relationships may exist. For example, "A and/or B" may indicate: only A exists, only B exists, and both A and B exist, where A and B may be singular or plural. "Or" indicates that two relationships may exist, for example, only A exists, and only B exists. When A and B are mutually exclusive, it may also indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may indicate: a, b, c, "a and b", "a and c", "b and c", or "a and b and c".

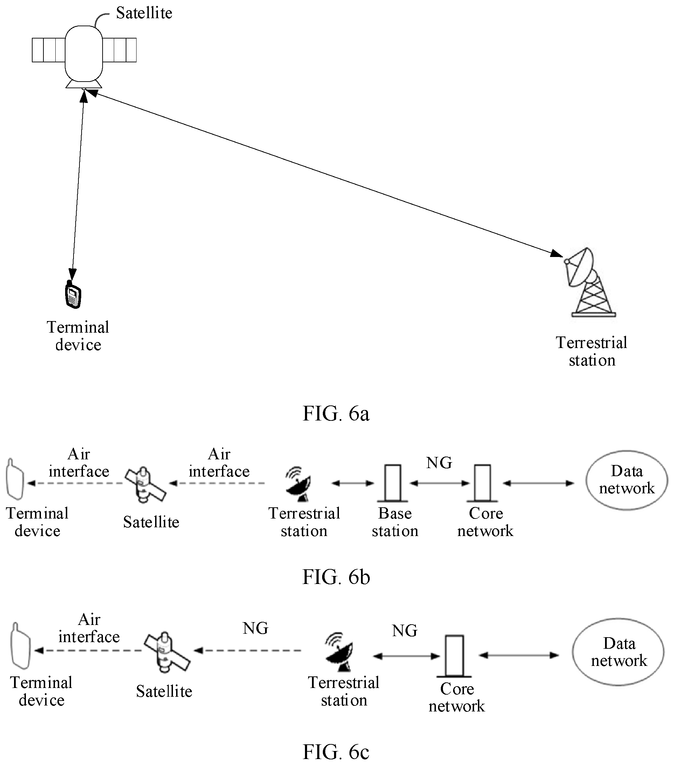

The method provided in embodiments of this application may be applied to a non-terrestrial network (non-terrestrial network, NTN) communication system. As shown in FIG. 6a, the communication system may include a terminal device, a satellite, and a terrestrial station (which may also be referred to as a gateway station or gateway). It may be understood that FIG. 6a shows only one satellite and one terrestrial station. In actual use, an architecture with a plurality of satellites and/or a plurality of terrestrial stations may be used based on a requirement. Each satellite may provide a service for one or more terminal devices, each satellite may correspond to one or more terrestrial stations, each terrestrial station may correspond to one or more satellites, and the like. This is not specifically limited in embodiments of this application. The method provided in embodiments of this application may be applied to an internet of things (internet of things, IoT) system, an internet of vehicles (Vehicle-to-X, V2X), and a narrowband internet of things (narrowband internet of things, NB-IoT) system. For another example, the method may be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, or a future communication network. This is not specifically limited in embodiments of this application.

The terminal device is an apparatus having a wireless receiving and sending function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th generation (5th generation, 5G) network or a future network, or the like that has a wireless communication function. This is not limited in embodiments of this application. For example, communication may further be performed between terminal devices by using device-to-device (device-to-device, D2D) or machine-to-machine (machine-to-machine, M2M). The terminal device shown in embodiments of this application may alternatively be a device in the internet of things (internet of things, IoT). The IoT network may include, for example, an internet of vehicles. Communication modes in an internet of vehicles system are collectively referred to as a vehicle-to-X (vehicle-to-X, V2X, where X may stand for anything) device. For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The terrestrial station may be configured to connect a satellite and a base station, or a satellite and a core network. The satellite may provide a radio access service to the terminal device, schedule a radio resource to an accessed terminal device, and provide a reliable radio transmission protocol, a data encryption protocol, and the like. In an example, the satellite may be an artificial earth satellite, a high-altitude aircraft, or the like that serves as a wireless communication base station, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal device.

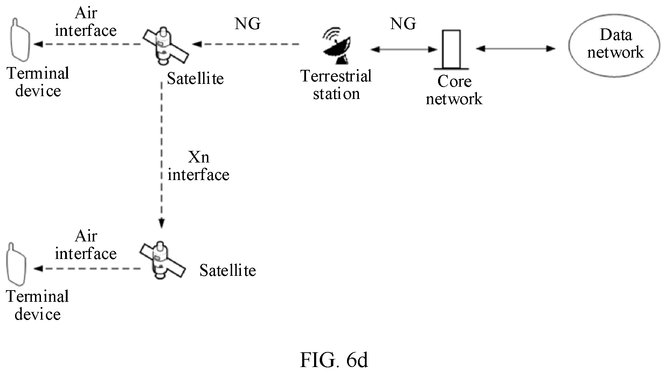

Therefore, in some implementations of this application, for example, in a satellite transparent transmission scenario, a network device may be the base station (which may also be referred to as a terrestrial base station) shown in FIG. 6a. FIG. 6b is a diagram of a satellite communication system in a transparent transmission scenario according to an embodiment of this application. For example, a terminal device may access a network through an air interface (where the air interface may be various types of air interfaces, for example, a 5G air interface), and a network device may be deployed on a terrestrial base station. A satellite is connected to a terrestrial station through a radio link. The terrestrial station and the terrestrial base station are connected to a core network in a wired or wireless manner. A radio link may exist between satellites. In the system shown in FIG. 6b, the satellite may have a transparent transmission and forwarding function. In some other implementations of this application, for example, in a regeneration scenario of the satellite, the network device may be the satellite shown in FIG. 6a. FIG. 6c is a diagram of a satellite communication system in a regeneration scenario according to an embodiment of this application. For example, a terminal device may access a network through an air interface (where the air interface may be various types of air interfaces, for example, a 5G air interface), and a network device may be deployed on a satellite (for example, in a regeneration mode of the satellite). For example, a base station or some functions of the base station are deployed on the satellite, and signaling interaction and user data transmission between base stations may be completed between satellites, as shown in FIG. 6d.

For example, network elements and interfaces between the network elements in FIG. 6b to FIG. 6d may be shown as follows.

The terminal device may access a satellite network through the air interface and initiates services such as a call and internet access. The base station may be configured to provide a radio access service, schedule a radio resource to an accessed terminal device, and provide a reliable radio transmission protocol, a data encryption protocol, and the like. The terrestrial station may be configured to be responsible for forwarding signaling and service data between the satellite and the core network. The core network may be configured for user access control, mobility management, session management, user security authentication, charging, or the like. The core network may include a plurality of functional units, for example, functional entities including a control plane and a data plane. For example, the core network shown in FIG. 6b to FIG. 6d may include an access and mobility management function (access and mobility management function, AMF), a session management function (session management function, SMF), and a user plane function (user plane function, UPF). For example, the AMF may be configured to be responsible for user access management, security authentication, and mobility management. The UPF may be configured to be responsible for managing user plane data transmission, traffic statistics collection, and the like. The air interface shown in FIG. 6b to FIG. 6d may be understood as a radio link between a terminal and the base station, or a radio link between the satellite and the terrestrial station. An Xn interface may be understood as an interface between base stations, and is mainly configured for signaling interaction such as handover. An NG interface may be used as an interface between the base station and the core network, and is configured to exchange signaling such as non-access stratum (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (non-geostationary earth orbit, NGEO), a high altitude platform station (high altitude platform station, HAPS), or the like. A specific type of the satellite is not limited in embodiments of this application.

In some deployments of the network device, the network device may include a central unit (central unit, CU), a distributed unit (distributed unit, DU), and the like. In some other deployments of the network device, the CU may further include a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a functional module, or the like. In an ORAN system, the CU may also be referred to as an open (open, O) CU, the DU may also be referred to as an O-DU, the CU-CP may also be referred to as an O-CU-CP, the CU-UP may also be referred to as an O-CU-UP, and the like. The deployment manner of the network device listed herein is merely an example. With evolution of a standard technology, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions and the network architecture provided in embodiments of this application are also applicable to similar technical problems.

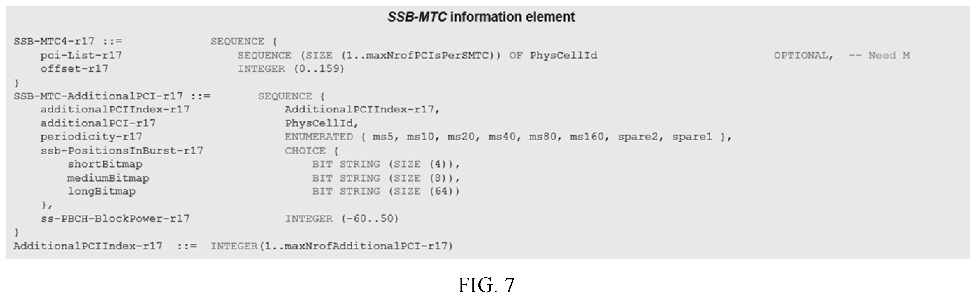

In an NTN scenario, multi-satellite joint transmission is a direction currently under research. Due to a difference in arrival times of signals from different satellites at UE, there is a technical barrier in implementing multi-satellite joint transmission. In view of this, embodiments of this application provide a satellite communication method and a related apparatus. When there is a serving satellite, a synchronization signal block SSB of a neighboring satellite is configured as a quasi-co-location QCL source signal, the neighboring satellite is used as a cooperative satellite of the serving satellite, and a signal offset, at a terminal device UE, of the cooperative satellite relative to the serving satellite is introduced. For example, the offset is configured with reference to a manner of setting an SMTC offset (If smtc4list is present, for cells indicated in the pci-List parameter in each SSB-MTC4 element of the list in the same MeasObjectNR, the UE shall set up an additional SS/PBCH block measurement timing configuration (SMTC) in accordance with the received offset parameter in each SSB-MTC4 configuration and use the duration parameter and periodicity (derived from parameter periodicityAndOffset) from the smtcl configuration. The first subframe of each SMTC occasion occurs at an SFN and subframe of the NRSpCell meeting the above condition). FIG. 7 shows a manner of setting the signal offset offset by configuring two information elements SSB-MTC4-r17 and SSB-MTC-AdditionalPCI-r17 in an SSB-MTC information element (information element). In this way, the terminal device can determine, based on the signal offset, an appropriate measurement window for receiving the SSB from the cooperative satellite, so that the terminal device can more easily receive the SSB from the cooperative satellite, to implement multi-satellite joint transmission. Certainly, this application is not limited to completing configuration based on the two information elements SSB-MTC4-r17 and SSB-MTC-AdditionalPCI-r17.

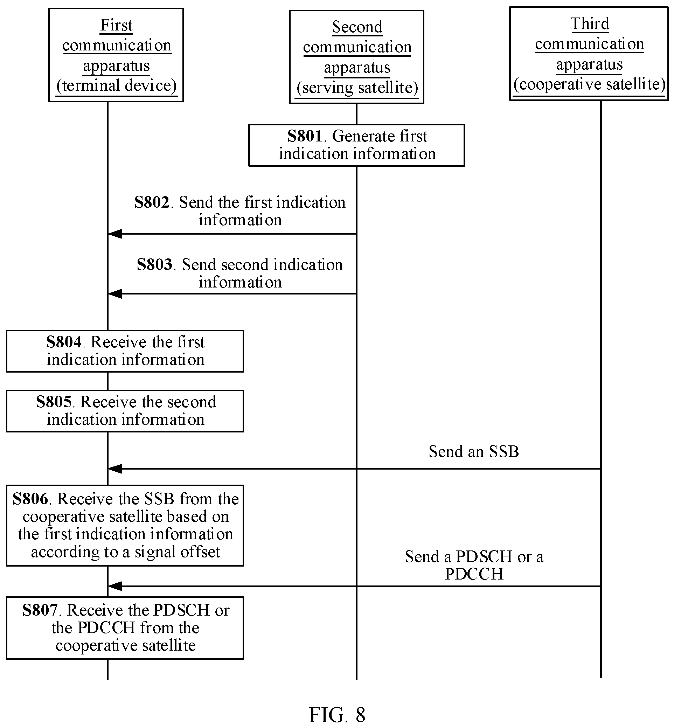

In the following satellite communication method (as shown in FIG. 8), a first communication apparatus may be a terminal device, a chip disposed in the terminal device, or a functional module in the terminal device, a second communication apparatus may be a network device, a chip disposed in the network device, or a functional module in the network device, and a third communication apparatus may be a network device, a chip disposed in the network device, or a functional module in the network device. As described above, the network device may include an access network device, a functional module, or the like in an O-RAN architecture. For detailed descriptions of the terminal device and the network device, refer to FIG. 6a and FIG. 6b to FIG. 6d. Details are not described herein again. For ease of description, in embodiments of this application, the terminal device and the network device may be used as examples for description in specific examples. However, the examples should not be construed as a limitation on embodiments of this application.

FIG. 8 is a schematic flowchart of a satellite communication method according to an embodiment of this application. The method includes but is not limited to the following steps.

**Step S801.** A second communication apparatus generates first indication information.

The second communication apparatus may be a network device, a chip disposed in the network device, or a functional module in the network device. The network device is deployed on a serving satellite, or the network device is the serving satellite.

The first indication information may also have another name, and this is not specifically limited herein. For example, the first indication information may be an SSB-MTC-AdditionalPCI-r17 information element, and an indication manner of the first indication information includes at least the following two cases:
**Case 1:** The first indication information includes a signal offset, at a terminal device UE, of a cooperative satellite relative to the serving satellite, or the first indication information includes a signal offset offset of a third communication apparatus relative to the second communication apparatus at the terminal device UE (that is, a first communication apparatus). Optionally, the serving satellite (or the second communication apparatus) may determine the signal offset based on one-way delays (or a difference between the delays) from the serving satellite (or the second communication apparatus) and the cooperative satellite (or the third communication apparatus) to the terminal device UE (that is, the first communication apparatus), and time domain information (for example, SSB periods or SSB patterns) of the serving satellite (or the second communication apparatus) and the cooperative satellite (or the third communication apparatus). Generally, a larger one-way delay indicates a larger signal offset.
   In this embodiment of this application, the signal offset offset may be a positive value, may be zero, or may be a negative value. This is different from a physical meaning of a conventional offset offset, whose value generally ranges from 0 to 159 subframes.
**Case 2:** The first indication information includes reference information for calculating the offset. For example, the reference information may include ephemeris information of the cooperative satellite, and certainly may further include other information, provided that the reference information can be used to calculate or determine the offset.

In addition, in this embodiment of this application, the serving satellite (or the second communication apparatus) further configures a synchronization signal block SSB of the cooperative satellite (or the third communication apparatus) as a quasi-co-location (Quasi-Co-Location, QCL) source signal, for example, configures a transmission configuration indicator (transmission configuration indication, TCI) state (state), and uses the SSB of the cooperative satellite as the QCL source signal.

**Step S802.** The second communication apparatus sends the first indication information.

**Step S803.** The second communication apparatus sends second indication information.

The second indication information indicates that the SSB of the cooperative satellite is the QCL source signal. For example, the second indication information may also have another name, and this is not specifically limited herein. For example, the second indication information may be a TCI state.

In addition, a sending sequence of the second indication information and the first indication information is not limited herein, and is specifically determined based on an actual requirement.

**Step S804.** The first communication apparatus receives the first indication information.

Specifically, after obtaining the first indication information, the first communication apparatus determines content indicated in the first indication information. For example, if the first indication information indicates the foregoing case 1, the first communication apparatus obtains the signal offset offset from the first indication information; or if the first indication information indicates the foregoing case 2, the first communication apparatus obtains, from the first indication information, the reference information for calculating the signal offset offset.

**Step S805.** The first communication apparatus receives the second indication information.

Specifically, after obtaining the second indication information, the first communication apparatus parses the second indication information, for example, parses the second indication information to obtain an SSB index (index) configured in the TCI state, to determine that the SSB of the cooperative satellite (or the third communication apparatus) is the QCL source signal. In this way, it can be determined that, when the serving satellite (or the second communication apparatus) is currently providing a communication service for the first communication apparatus, the cooperative satellite (or the third communication apparatus) and the serving satellite (or the second communication apparatus) are in a cooperative relationship or a joint transmission relationship.

**Step S806.** The first communication apparatus receives the SSB from the cooperative satellite based on the first indication information according to the signal offset.

In this phase, if the content indicated by the first indication information is different, implementation processes of this step are also different. Examples are provided below for description.

If the content indicated by the first indication information is the foregoing case 1, the first communication apparatus directly uses the signal offset offset indicated in the first indication information, for example, determines a time window based on the signal offset, and then receives, within the time window, the QCL-associated SSB sent by the cooperative satellite (or the third communication apparatus) in the second indication information.

If the content indicated by the first indication information is the foregoing case 2, the first communication apparatus determines the signal offset based on the reference information in the first indication information. For example, the first communication apparatus determines, based on an ephemeris of the serving satellite and an ephemeris of the cooperative satellite, one-way delay parameters from the serving satellite (or the second communication apparatus) and the cooperative satellite (or the third communication apparatus) to the UE. Optionally, another parameter may be further used in this process, for example, a global navigation satellite system (Global Navigation Satellite System, GNSS) of the first communication apparatus. Then, the first communication apparatus determines the signal offset offset based on the one-way delay parameters, determines a time window based on the signal offset, and then receives, within the time window, the QCL-associated SSB sent by the cooperative satellite (or the third communication apparatus) in the second indication information.

**Step S807.** The first communication apparatus receives a physical downlink shared channel PDSCH or a physical downlink control channel PDCCH from the cooperative satellite.

Specifically, after receiving the SSB from the cooperative satellite (or the third communication apparatus), the first communication apparatus may complete synchronization based on the SSB, and then receive the physical downlink shared channel PDSCH or the physical downlink control channel PDCCH from the cooperative satellite.

In this embodiment of this application, the serving satellite (or the second communication apparatus) and the cooperative satellite (or the third communication apparatus) may be in intra-frequency networking, or may be in inter-frequency networking. The content indicated in the first indication information may also vary with different networking modes, and subsequent related step may also vary. For example, step S806 may vary. For ease of understanding, examples are provided below for description.

**Solution 1:** The serving satellite (or the second communication apparatus) and the cooperative satellite (or the third communication apparatus) are in the intra-frequency networking.

In this solution, in step S806, after the time window is determined based on the signal offset, optionally, the first communication apparatus adjusts a center frequency of a receiver to a center frequency of an SSB of the serving satellite (or the second communication apparatus), to receive the QCL-associated SSB sent by the cooperative satellite (or the third communication apparatus) in the second indication information, demodulates the SSB based on a subcarrier spacing (sub-carrier space, SCS) of the SSB of the serving satellite (or the second communication apparatus), then completes synchronization based on an SSB obtained through demodulation, and performs step S807.

**Solution 2:** The serving satellite (or the second communication apparatus) and the cooperative satellite (or the third communication apparatus) are in the inter-frequency networking.

In this solution, the first indication information may further include a center frequency of the SSB of the cooperative satellite (or the third communication apparatus), a subcarrier spacing SCS of the SSB of the cooperative satellite (or the third communication apparatus), and a system frame number SFN offset between the cooperative satellite and the serving satellite. Optionally, the information may be indicated by other information instead of the first indication information. After the first communication apparatus obtains the information, in addition to the signal offset, the SFN offset is further used for determining the time window in step S806. In other words, the time window is determined based on information such as the signal offset and the SFN offset. Optionally, the first communication apparatus adjusts a center frequency of a receiver to the center frequency of the SSB of the cooperative satellite (or the third communication apparatus), to receive the QCL-associated SSB sent by the cooperative satellite (or the third communication apparatus) in the second indication information, demodulates the SSB based on a subcarrier spacing (sub-carrier space, SCS) of the SSB of the cooperative satellite (or the third communication apparatus), then completes synchronization based on an SSB obtained through demodulation, and performs step S807.

In this embodiment of this application, the first indication information and the second indication information may be sent in one message, or may be separately sent in two different messages. This is not limited herein. Certainly, all or some of the parameters indicated by the first indication information and the second indication information may alternatively not be indicated by information exchange, but are directly specified in a protocol in advance.

In the method described in FIG. 8, when the serving satellite (or the second communication apparatus) is currently providing the communication service for the first communication apparatus, the cooperative satellite (or the third communication apparatus) is configured, via QCL, to be in the cooperative relationship with the serving satellite (or the second communication apparatus), and then the one-way delays from the cooperative satellite and the serving satellite to the first communication apparatus are represented based on the signal offset, so that the first communication apparatus determines the time window for receiving the SSB of the cooperative satellite, to perform SSB reception and synchronization. In this way, the first communication apparatus can communicate with the cooperative satellite, that is, joint transmission between the cooperative satellite and the serving satellite is implemented, thereby achieving throughput enhancement that is transparent to a terminal side.

Based on the foregoing descriptions, it can be learned that the case 1 and the case 2 may be combined with the solution 1 (intra-frequency networking) and the solution 2 (inter-frequency networking), and there are at least four different implementations. For ease of understanding, the four combinations are described by using examples below.

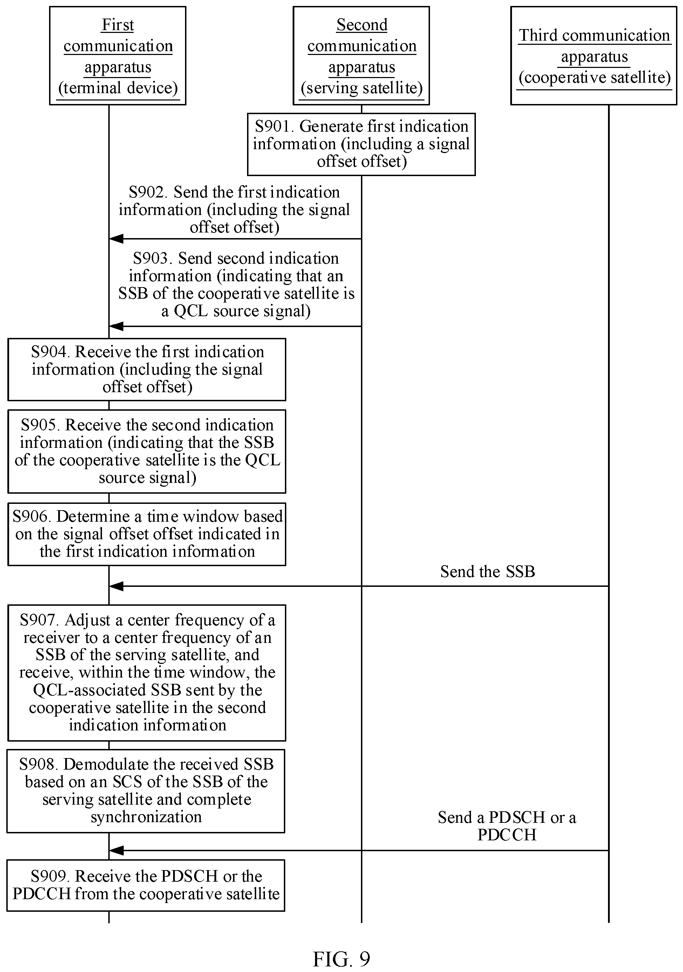

**Example 1:** The solution 1 is combined with the case 1, to be specific, the intra-frequency networking is used and the first indication information indicates the signal offset. For an implementation principle, refer to related explanations of the method embodiment shown in FIG. 8. An execution procedure is shown in FIG. 9, and includes the following steps.

Step S901. A second communication apparatus generates first indication information (including a signal offset offset).

Step S902. The second communication apparatus sends the first indication information.

Step S903. The second communication apparatus sends second indication information (indicating that an SSB of a cooperative satellite is a QCL source signal).

Step S904. A first communication apparatus receives the first indication information.

Step S905. The first communication apparatus receives the second indication information.

Step S906. The first communication apparatus determines a time window based on the signal offset offset indicated in the first indication information.

Step S907. The first communication apparatus adjusts a center frequency of a receiver to a center frequency of an SSB of a serving satellite, and receives, within the time window, the QCL-associated SSB sent by the cooperative satellite in the second indication information.

Step S908. The first communication apparatus demodulates the received SSB based on an SCS of the SSB of the serving satellite and completes synchronization.

Step S909. The first communication apparatus receives a PDSCH or a PDCCH from the cooperative satellite.

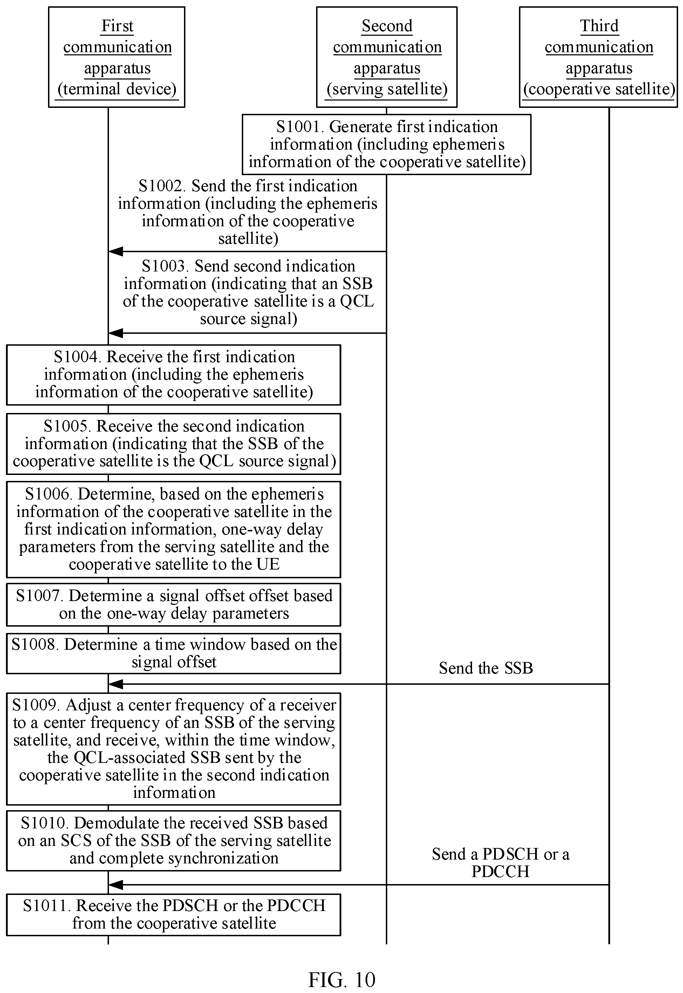

**Example 2:** The solution 1 is combined with the case 2, to be specific, the intra-frequency networking is used and the first indication information indicates the reference information for calculating the signal offset. For an implementation principle, refer to related explanations of the method embodiment shown in FIG. 8. An execution procedure is shown in FIG. 10, and includes the following steps.

Step S1001. A second communication apparatus generates first indication information (including ephemeris information of a cooperative satellite).

Step S1002. The second communication apparatus sends the first indication information.

Step S1003. The second communication apparatus sends second indication information (indicating that an SSB of the cooperative satellite is a QCL source signal).

Step S1004. A first communication apparatus receives the first indication information.

Step S1005. The first communication apparatus receives the second indication information.

Step S1006. The first communication apparatus determines, based on the ephemeris information of the cooperative satellite in the first indication information, one-way delay parameters from a serving satellite and the cooperative satellite to UE.

Step S1007. The first communication apparatus determines a signal offset offset based on the one-way delay parameters.

Step S1008. The first communication apparatus determines a time window based on the signal offset.

Step S1009. The first communication apparatus adjusts a center frequency of a receiver to a center frequency of an SSB of the serving satellite, and receives, within the time window, the QCL-associated SSB sent by the cooperative satellite in the second indication information.

Step S1010. The first communication apparatus demodulates the received SSB based on an SCS of the SSB of the serving satellite and completes synchronization.

Step S1011. The first communication apparatus receives a PDSCH or a PDCCH from the cooperative satellite.

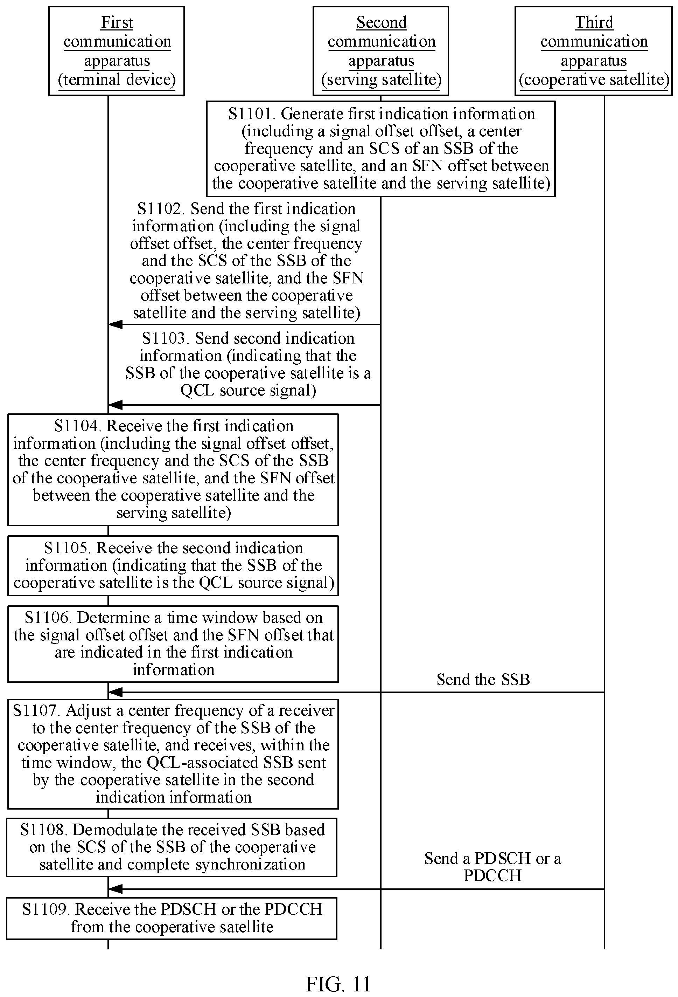

**Example 3:** The solution 2 is combined with the case 1, to be specific, the inter-frequency networking is used and the first indication information indicates the signal offset. For an implementation principle, refer to related explanations of the method embodiment shown in FIG. 8. An execution procedure is shown in FIG. 11, and includes the following steps.

Step S1101. A second communication apparatus generates first indication information (including a signal offset offset, a center frequency and an SCS of an SSB of a cooperative satellite, and an SFN offset between the cooperative satellite and a serving satellite).

Step S1102. The second communication apparatus sends the first indication information.

Step S1103. The second communication apparatus sends second indication information (indicating that the SSB of the cooperative satellite is a QCL source signal).

Step S1104. A first communication apparatus receives the first indication information.

Step S1105. The first communication apparatus receives the second indication information.

Step S1106. The first communication apparatus determines a time window based on the signal offset offset and the SFN offset that are indicated in the first indication information.

Step S1107. The first communication apparatus adjusts a center frequency of a receiver to the center frequency of the SSB of the cooperative satellite, and receives, within the time window, the QCL-associated SSB sent by the cooperative satellite in the second indication information.

Step S1108. The first communication apparatus demodulates the received SSB based on the SCS of the SSB of the cooperative satellite and completes synchronization.

Step S1109. The first communication apparatus receives a PDSCH or a PDCCH from the cooperative satellite.

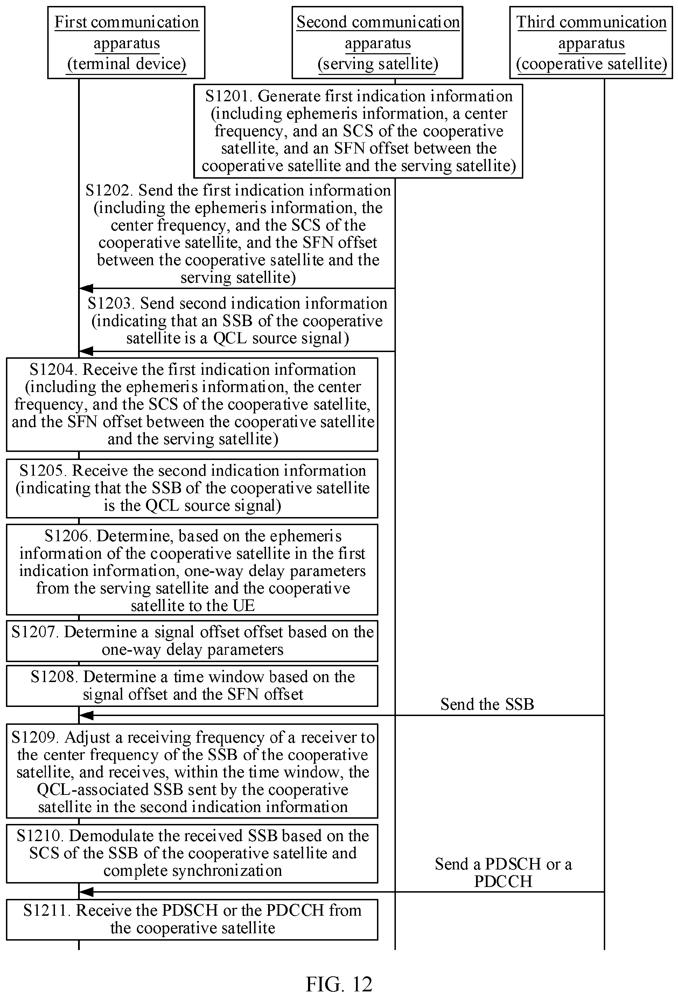

**Example 4:** The solution 2 is combined with the case 2, to be specific, the inter-frequency networking is used and the first indication information indicates the reference information for calculating the signal offset. For an implementation principle, refer to related explanations of the method embodiment shown in FIG. 12. An execution procedure is shown in FIG. 10, and includes the following steps.

Step S1201. A second communication apparatus generates first indication information (including ephemeris information, a center frequency, and an SCS of a cooperative satellite, and an SFN offset between the cooperative satellite and a serving satellite).

Step S1202. The second communication apparatus sends the first indication information.

Step S1203. The second communication apparatus sends second indication information (indicating that an SSB of the cooperative satellite is a QCL source signal).

Step S1204. A first communication apparatus receives the first indication information.

Step S1205. The first communication apparatus receives the second indication information.

Step S1206. The first communication apparatus determines, based on the ephemeris information of the cooperative satellite in the first indication information, one-way delay parameters from the serving satellite and the cooperative satellite to UE.

Step S1207. The first communication apparatus determines a signal offset offset based on the one-way delay parameters.

Step S1208. The first communication apparatus determines a time window based on the signal offset and the SFN offset.

Step S1209. The first communication apparatus adjusts a receiving frequency of a receiver to the center frequency of the SSB of the cooperative satellite, and receives, within the time window, the QCL-associated SSB sent by the cooperative satellite in the second indication information.

Step S1210. The first communication apparatus demodulates the received SSB based on the SCS of the SSB of the cooperative satellite and completes synchronization.

Step S1211. The first communication apparatus receives a PDSCH or a PDCCH from the cooperative satellite.

Communication apparatuses provided in embodiments of this application are described below.

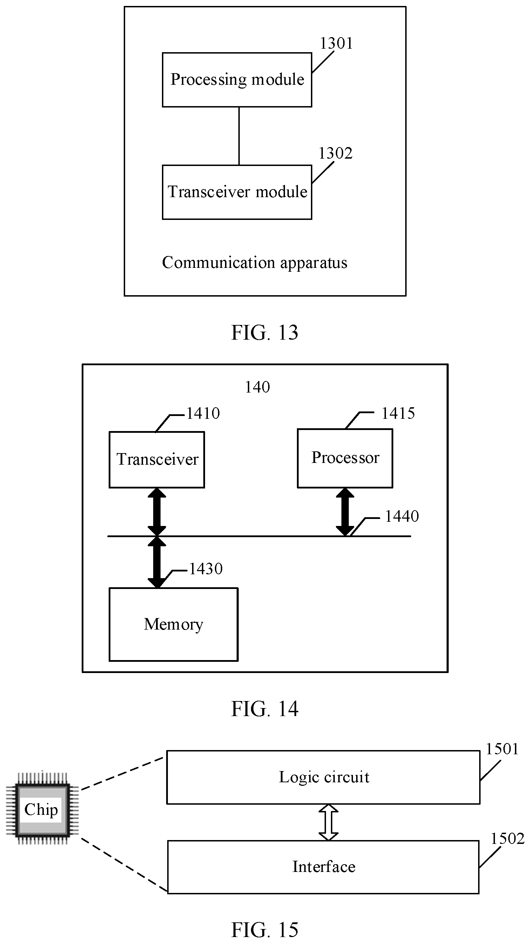

In this application, the communication apparatuses are divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The communication apparatuses in embodiments of this application are described below in detail with reference to FIG. 13 to FIG. 15.

FIG. 13 is a diagram of a structure of a communication apparatus according to an embodiment of this application. As shown in FIG. 13, the communication apparatus includes a processing module 1301 and a transceiver module 1302. The transceiver module 1302 may implement a corresponding communication function, and the processing module 1301 is configured to process data. For example, the transceiver module 1302 may also be referred to as an interface, a communication interface, or a communication module.

In some embodiments of this application, the communication apparatus may be configured to perform an action performed by a transmitting end in the foregoing method embodiments. For example, the transmitting end may be a device or a chip or a functional module that can be configured in the device. The transceiver module 1302 is configured to perform a receiving and sending-related operation of the transmitting end in the foregoing method embodiments. The processing module 1301 is configured to perform a processing-related operation of the transmitting end in the foregoing method embodiments. The processing module 1301 may perform a corresponding operation by invoking a computer program, or may perform a corresponding operation by using a corresponding hardware circuit. The transceiver module 1302 may independently perform a receiving and sending operation, or may perform a corresponding receiving and sending operation under control of the processing module 1301.

For example, the communication apparatus shown in FIG. 13 may be a network device or a chip or a module on the network device. The network device may be a serving satellite or may be deployed on the serving satellite. For ease of differentiation, the communication apparatus may be referred to as a second communication apparatus. The processing module 1301 and the transceiver module 1302 in the communication apparatus may separately perform the following operations.

The processing module 1301 generates first indication information, where the first indication information includes a signal offset, at a terminal device UE, of a cooperative satellite relative to the serving satellite or reference information for calculating the offset, and a synchronization signal block SSB of the cooperative satellite is configured as a quasi-co-location QCL source signal.

The transceiver module 1302 sends the first indication information.

In the method, when the serving satellite (or a second communication apparatus) is currently providing a communication service for a first communication apparatus, the cooperative satellite (or a third communication apparatus) is configured, via QCL, to be in a cooperative relationship with the serving satellite (or the second communication apparatus), and then one-way delays from the cooperative satellite and the serving satellite to the first communication apparatus are represented based on the signal offset, so that the first communication apparatus determines a time window for receiving the SSB of the cooperative satellite, to perform SSB reception and synchronization. In this way, the first communication apparatus can communicate with the cooperative satellite, that is, joint transmission between the cooperative satellite and the serving satellite is implemented, thereby achieving throughput enhancement that is transparent to a terminal side.

In a possible implementation, the serving satellite and the cooperative satellite belong to intra-frequency networking.

In another possible implementation, the serving satellite and the cooperative satellite belong to inter-frequency networking.

In another possible implementation, the first indication information further includes a center frequency of the SSB of the cooperative satellite, a subcarrier spacing SCS of the SSB of the cooperative satellite, and a system frame number SFN offset between the cooperative satellite and the serving satellite, the SFN offset and the signal offset are used to determine a time window for receiving the SSB of the cooperative satellite, the center frequency is used as a frequency for a receiver to receive the SSB, and the SCS is used to demodulate the SSB from the cooperative satellite.

In another possible implementation, the reference information includes an ephemeris of the cooperative satellite.

In another possible implementation, the method further includes:
calculating the signal offset based on one-way delay parameters from the serving satellite and the cooperative satellite to the UE.

In another possible implementation, the method further includes:
The transceiver module 1302 sends second indication information, where the second indication information indicates that the SSB of the cooperative satellite is the QCL source signal.

FIG. 13 is reused. In some other embodiments of this application, for example, the communication apparatus shown in FIG. 13 may be a terminal device or a chip or a module in the terminal device. The terminal device may be deployed on the ground. For ease of differentiation, the communication apparatus may be referred to as a first communication apparatus. The processing module 1301 and the transceiver module 1302 in the communication apparatus may separately perform the following operations.

The transceiver module 1302 receives first indication information, where the first indication information includes a signal offset of a cooperative satellite relative to a serving satellite at the terminal device UE or reference information for calculating the signal offset, and a synchronization signal block SSB of the cooperative satellite is configured as a quasi-co-location QCL source signal.

The transceiver module 1302 receives the SSB from the cooperative satellite based on the first indication information according to the signal offset.

The transceiver module 1302 receives a physical downlink shared channel PDSCH or a physical downlink control channel PDCCH from the cooperative satellite.

In the method, when the serving satellite (or a second communication apparatus) is currently providing a communication service for a first communication apparatus, the cooperative satellite (or a third communication apparatus) is configured, via QCL, to be in a cooperative relationship with the serving satellite (or the second communication apparatus), and then one-way delays from the cooperative satellite and the serving satellite to the first communication apparatus are represented based on the signal offset, so that the first communication apparatus determines a time window for receiving the SSB of the cooperative satellite, to perform SSB reception and synchronization. In this way, the first communication apparatus can communicate with the cooperative satellite, that is, joint transmission between the cooperative satellite and the serving satellite is implemented, thereby achieving throughput enhancement that is transparent to a terminal side.

In a possible implementation, the first indication information includes the signal offset, and the receiving the SSB from the cooperative satellite based on the first indication information according to the signal offset includes:
receiving the SSB from the cooperative satellite based on the signal offset in the first indication information.

In another possible implementation, the first indication information includes the reference information, and the receiving the SSB from the cooperative satellite based on the first indication information according to the signal offset includes:
The processing module 1301 determines the signal offset based on the reference information in the first indication information.

The transceiver module 1302 receives the SSB from the cooperative satellite based on the signal offset.

In another possible implementation, the reference information includes an ephemeris of the cooperative satellite, and the determining the signal offset based on the reference information in the first indication information, the processing module 1301 is configured to:
determining one-way delay parameters from the serving satellite and the cooperative satellite to the UE based on an ephemeris of the serving satellite and the ephemeris of the cooperative satellite; and
determining the signal offset based on the one-way delay parameters.

In another possible implementation, the serving satellite and the cooperative satellite belong to intra-frequency networking.

In another possible implementation, the serving satellite and the cooperative satellite belong to inter-frequency networking.

In another possible implementation, the first indication information further includes a center frequency of the SSB of the cooperative satellite, a subcarrier spacing SCS of the SSB of the cooperative satellite, and a system frame number SFN offset between the cooperative satellite and the serving satellite, the SFN offset and the signal offset are used to determine a time window for receiving the SSB of the cooperative satellite, the center frequency is used as a frequency for a receiver to receive the SSB, and the SCS is used to demodulate the SSB from the cooperative satellite.

In another possible implementation, the method further includes:
The transceiver module 1302 receives second indication information, where the second indication information indicates that the SSB of the cooperative satellite is the QCL source signal.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 13 falls within the protection scope of embodiments of this application.

The following descriptions are merely examples, and the product form of the communication apparatus in embodiments of this application is not limited thereto.

In a possible implementation, in the communication apparatus shown in FIG. 13, the processing module 1301 may be one or more processors, and the transceiver module 1302 may be a transceiver; or the transceiver module 1302 may be a sending module and a receiving module, the sending module may be a transmitter, and the receiving module may be a receiver, the sending module and the receiving module are integrated into one component, for example, a transceiver. In embodiments of this application, the processor and the transceiver may be coupled or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

As shown in FIG. 14, a communication apparatus 140 includes one or more processors 1415 and a transceiver 1410. For example, the transceiver 1410 is configured to perform functions or steps implemented by the transceiver module 1302 shown in FIG. 13, and the processor 1415 is configured to perform functions or steps implemented by the processing module 1301 shown in FIG. 13. For specific descriptions of the processor 1415 and the transceiver 1410, refer to FIG. 13 or the method embodiments shown above. Details are not described herein again.

In the foregoing embodiments, for descriptions of related steps and information, refer to the descriptions in the foregoing method embodiments. Details are not described herein again.

In each implementation of the communication apparatus shown in FIG. 14, the transceiver may include a receiver and a transmitter. The receiver is configured to perform a receiving function (or an operation), and the transmitter is configured to perform a transmitting function (or an operation). In addition, the transceiver is configured to communicate with another device/apparatus through a transmission medium.

Optionally, the communication apparatus 140 may further include one or more memories 1430, configured to store program instructions and/or data. The memory 1430 is coupled to the processor 1415. The coupling in this embodiment of this application may be an indirect coupling or a communication connection between apparatuses, units, or modules in an electrical form, a mechanical form, or another form, and is used for information exchange between the apparatuses, the units, or the modules. The processor 1415 may cooperate with the memory 1430. The processor 1415 may execute the program instructions stored in the memory 1430. Optionally, at least one of the one or more memories may be included in the processor.

A specific connection medium between the transceiver 1410, the processor 1415, and the memory 1430 is not limited in this embodiment of this application. In this embodiment of this application, the memory 1430, the processor 1415, and the transceiver 1410 are connected through a bus 1440 in FIG. 14. The bus is represented by using a bold line in FIG. 14. A connection manner between other components is merely an example for description, and is not limited thereto. The bus may be classified into an address bus, a data bus, a control bus, and the like. For ease of representation, only one bold line is used for representation in FIG. 14, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor may implement or perform the methods, the steps, and the logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware and a software module in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of instructions or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 1415 is mainly configured to process a communication protocol and communication data, control the entire communication apparatus, execute a software program, and process data of the software program. The memory 1430 is mainly configured to store a software program and the data. The transceiver 1410 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, for example, a touchscreen, a display, or a keyboard, is mainly configured to receive data input by a user and output data to the user.

After the communication apparatus is powered on, the processor 1415 may read the software program in the memory 1430, interpret and execute instructions of the software program, and process data of the software program. When data needs to be sent in a wireless manner, the processor 1415 performs baseband processing on to-be-sent data, and then outputs a baseband signal to a radio frequency circuit. The radio frequency circuit performs radio frequency processing on the baseband signal, and then sends a radio frequency signal in an electromagnetic wave form via the antenna. When data is sent to the communication apparatus, the radio frequency circuit receives the radio frequency signal via the antenna, converts the radio frequency signal into a baseband signal, and outputs the baseband signal to the processor 1415. The processor 1415 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in this embodiment of this application may further have more components and the like than those in FIG. 14. This is not limited in this embodiment of this application. The methods performed by the processor and the transceiver are merely examples. For specific steps performed by the processor and the transceiver, refer to the methods described above.

In another possible implementation, in the communication apparatus shown in FIG. 13, the processing module 1301 may be one or more logic circuits, and the transceiver module 1302 may be an input/output interface, or referred to as a communication interface, an interface circuit, an interface, or the like. Alternatively, the transceiver module 1302 may be a sending module and a receiving module. The sending module may be an output interface, and the receiving module may be an input interface. The sending module and the receiving module are integrated into one module, for example, an input/output interface. As shown in FIG. 15, the communication apparatus shown in FIG. 15 includes a logic circuit 1501 and an interface 1502. In other words, the processing module 1301 may be implemented by using the logic circuit 1501, and the transceiver module 1302 may be implemented by using the interface 1502. The logic circuit 1501 may be a chip, a processing circuit, an integrated circuit, a system on chip (system on chip, SoC), or the like. The interface 1502 may be a communication interface, an input/output interface, a pin, or the like. For example, FIG. 15 shows an example in which the communication apparatus is a chip. The chip includes the logic circuit 1501 and the interface 1502.

In embodiments of this application, the logic circuit and the interface may further be coupled to each other. A specific manner of connection between the logic circuit and the interface is not limited in embodiments of this application. For example, the logic circuit 1501 may be configured to perform functions or steps implemented by the processing module 1301 shown in FIG. 13, and the interface 1502 may be configured to perform functions or steps implemented by the transceiver module 1302 shown in FIG. 13. For specific descriptions of the logic circuit 1501 and the interface 1502, refer to FIG. 13 or the method embodiments shown above. Details are not described herein again.

The foregoing descriptions of the communication apparatus are merely examples. For specific descriptions of the communication apparatus shown in FIG. 15, further refer to the foregoing method embodiments, FIG. 13, or FIG. 14. Details are not described herein again.

The communication apparatus shown in this embodiment of this application may implement the method provided in embodiments of this application in a form of hardware, or may implement the method provided in embodiments of this application in a form of software. This is not limited in embodiments of this application.

In the foregoing embodiments, for descriptions of related steps and information, refer to the descriptions in the foregoing method embodiments. Details are not described herein again. For specific implementations of the embodiment shown in FIG. 15, further refer to the foregoing embodiments. Details are not described herein again.

An embodiment of this application further provides a communication system. The communication system includes a terminal device, a serving satellite, and a cooperative satellite. The terminal device, the serving satellite, and the cooperative satellite may interact with each other to perform all or some of the steps in any one of the foregoing method embodiments.

In addition, this application further provides a computer program. The computer program is configured to implement operations and/or processing performed by the communication apparatuses in the method provided in this application.

This application further provides a computer-readable storage medium. The computer-readable storage medium stores computer code. When the computer code is run on a computer, the computer is caused to perform operations and/or processing performed by the communication apparatuses in the method provided in this application.

This application further provides a computer program product. The computer program product includes computer code or a computer program. When the computer code or the computer program is run on a computer, operations and/or processing performed by the communication apparatuses in the method provided in this application are/is performed.

In the several embodiments provided in this application, it should be understood that the disclosed system, apparatus, and method may be implemented in other manners. For example, the described apparatus embodiments are merely examples. For example, division of modules is merely logical functional division. In an actual implementation, there may be another division manner. For example, a plurality of modules or components may be combined or integrated into another system, or some characteristics may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate components may or may not be physically separate, and components displayed as modules may or may not be physical modules, may be located in one position, or may be distributed on a plurality of network modules. Some or all of the modules may be selected based on an actual requirement to implement technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and is sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium and includes a plurality of instructions for instructing a computer device (which may be a personal computer, a server, a network device, or the like) to perform all or some of the steps of the method described in embodiments of this application. The readable storage medium includes any medium that can store program code, for example, a USB flash drive, a removable hard disk drive, a read-only memory (read-only memory, ROM), a random access memory (random access memory, RAM), a magnetic disk, or an optical disk.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, applied to a serving satellite, and comprising:
generating first indication information, wherein the first indication information comprises a signal offset, at a terminal device UE, of a cooperative satellite relative to the serving satellite or reference information for calculating the offset, and a synchronization signal block SSB of the cooperative satellite is configured as a quasi-co-location QCL source signal; and
sending the first indication information.

2. The method according to claim 1, wherein the serving satellite and the cooperative satellite belong to intra-frequency networking.

3. The method according to claim 1, wherein the serving satellite and the cooperative satellite belong to inter-frequency networking.

4. The method according to claim 3, wherein the first indication information further comprises a center frequency of the SSB of the cooperative satellite, a subcarrier spacing SCS of the SSB of the cooperative satellite, and a system frame number SFN offset between the cooperative satellite and the serving satellite.

5. The method according to any one of claims 1 to 4, wherein the reference information comprises an ephemeris of the cooperative satellite.

6. The method according to claim 5, further comprising:
calculating the signal offset based on one-way delay parameters from the serving satellite and the cooperative satellite to the UE.

7. The method according to any one of claims 1 to 6, further comprising:
sending second indication information, wherein the second indication information indicates that the SSB of the cooperative satellite is the QCL source signal.

8. A satellite communication method, applied to a terminal device, and comprising:
receiving first indication information, wherein the first indication information comprises a signal offset, at the terminal device UE, of a cooperative satellite relative to a serving satellite or reference information for calculating the signal offset, and a synchronization signal block SSB of the cooperative satellite is configured as a quasi-co-location QCL source signal;
receiving the SSB from the cooperative satellite based on the first indication information according to the signal offset; and
receiving a physical downlink shared channel PDSCH or a physical downlink control channel PDCCH from the cooperative satellite.

9. The method according to claim 8, wherein the first indication information comprises the signal offset, and the receiving the SSB from the cooperative satellite based on the first indication information according to the signal offset comprises:
receiving the SSB from the cooperative satellite based on the signal offset in the first indication information.

10. The method according to claim 8, wherein the first indication information comprises the reference information, and the receiving the SSB from the cooperative satellite based on the first indication information according to the signal offset comprises:
determining the signal offset based on the reference information in the first indication information; and
receiving the SSB from the cooperative satellite based on the signal offset.

11. The method according to claim 10, wherein the reference information comprises an ephemeris of the cooperative satellite, and the determining the signal offset based on the reference information in the first indication information comprises:
determining one-way delay parameters from the serving satellite and the cooperative satellite to the UE based on an ephemeris of the serving satellite and the ephemeris of the cooperative satellite; and
determining the signal offset based on the one-way delay parameters.

12. The method according to any one of claims 8 to 11, wherein the serving satellite and the cooperative satellite belong to intra-frequency networking.

13. The method according to any one of claims 8 to 11, wherein the serving satellite and the cooperative satellite belong to inter-frequency networking.

14. The method according to claim 13, wherein the first indication information further comprises a center frequency of the SSB of the cooperative satellite, a subcarrier spacing SCS of the SSB of the cooperative satellite, and a system frame number SFN offset between the cooperative satellite and the serving satellite, wherein the SFN offset and the signal offset are used to determine a time window for receiving the SSB of the cooperative satellite, the center frequency is used as a frequency for a receiver to receive the SSB, and the SCS is used to demodulate the SSB from the cooperative satellite.

15. The method according to any one of claims 8 to 14, further comprising:
receiving second indication information, wherein the second indication information indicates that the SSB of the cooperative satellite is the QCL source signal.

16. A communication apparatus, wherein the communication apparatus comprises a module configured to perform the method according to any one of claims 1 to 7; or the communication apparatus comprises a processor, and the processor is configured to perform the method according to any one of claims 1 to 7.

17. A communication apparatus, wherein the communication apparatus comprises a module configured to perform the method according to any one of claims 8 to 15; or the communication apparatus comprises a processor, and the processor is configured to perform the method according to any one of claims 8 to 15.

18. A communication apparatus, comprising a logic circuit and an interface, wherein the logic circuit is coupled to the interface; and
the interface is configured to input and/or output information, and the logic circuit is configured to perform the method according to any one of claims 1 to 15.

19. A computer-readable storage medium, wherein the computer-readable storage medium is configured to store a computer program, and when the computer program is executed, the method according to any one of claims 1 to 15 is performed.

20. A communication system, comprising a network device and a terminal device, wherein the network device is configured to perform the method according to any one of claims 1 to 7, and the terminal device is configured to perform the method according to any one of claims 8 to 15.
